Europäisches Patentamt

European Patent Office

Office européen des brevets

(11) Veröffentlichungsnummer: **0 258 523 B1**

(19)

(12) # EUROPÄISCHE PATENTSCHRIFT

(45) Veröffentlichungstag der Patentschrift: **26.06.91**

(51) Int. Cl.5: **C04B 35/58**

(21) Anmeldenummer: **87103925.1**

(22) Anmeldetag: **18.03.87**

(54) Verfahren zur Herstellung von Granulat aus Aluminium-Nitrid und dessen Verwendung.

(30) Priorität: **05.09.86 DE 3630303**

(43) Veröffentlichungstag der Anmeldung:
**09.03.88 Patentblatt 88/10**

(45) Bekanntmachung des Hinweises auf die
Patenterteilung:
**26.06.91 Patentblatt 91/26**

(84) Benannte Vertragsstaaten:
**AT CH DE FR GB LI NL SE**

(56) Entgegenhaltungen:

CHEMICAL ABSTRACTS, Band 85, Nr. 4, 26.
Juli 1976, Seite 220, Nr. 24857r, Columbus,
Ohio, US; & JP-A-76 40 332

CERAMIC ABSTRACTS, Band 54, Nrs. 1/2,
Januar-Februar 1974, Seite 16, Absatz e; T.
SAKAI et al.: "Effect of oxygen impurity on
the pressure sintering of aluminum nitride"

INORG. MAT., Band 11, Nr. 1, 1975, Seiten
58-61, Plenum Publishing Corp., New York,
US; D.N. POLUBOYARINOV et al.: "Sintering
of A1N ceramic"

(73) Patentinhaber: **W.C. Heraeus GmbH**
**Heraeusstrasse 12 - 14**
**W-6450 Hanau / Main(DE)**

(72) Erfinder: **Werdecker, Waltraud**
**Gustav-Hoch-Strasse 11**
**W-6450 Hanau(DE)**
Erfinder: **Becker, Wolfgang**
**Im Wiesengrund**
**W-6497 Steinau 2(DE)**
Erfinder: **Gottschalk, Harald**
**Friedlandstrasse 22**
**W-6454 Bruchköbel(DE)**
Erfinder: **Fleischer, Joachim**
**Im Reumer 1**
**W-6450 Gelnhausen 1(DE)**

(74) Vertreter: **Heinen, Gerhard, Dr.**
**W.C. Heraeus GmbH Zentralbereich Patente**
**und Lizenzen Heraeusstrasse 12-14**
**W-6450 Hanau(DE)**

## Beschreibung

Die vorliegende Erfindung bezieht sich auf ein Verfahren zur Herstellung eines feuchteunempfindlichen Granulats aus im wesentlichen Aluminium-Nitrid.

Es ist bekannt, daß pulverförmiges Aluminium-Nitrid hygroskopisch ist und sich daher für eine Vielzahl von Anwendungsfällen nicht eignet oder eine erhöhter apparativer Aufwand erforderlich ist, um es zu verarbeiten.

Der Erfindung liegt daher die Aufgabe zugrunde, ein Verfahren zur Herstellung von feuchteunempfindlichen rieselfähigen Granulats aus im wesentlichen Aluminium-Nitrid bereitzustellen.

Diese Aufgabe wird erfindungsgemäß dadurch gelöst, daß eine homogene Mischung aus mindestens 96 Gewichts-% Aluminium-Nitrid-Pulver und höchstens 4 Gewichts-% eines Sinterhilfsmittels mit einem in wasserfreiem Lösungsmittel gelösten Bindemittel angeteigt und anschließend granuliert, danach das Bindemittel samt seines Lösungsmittels durch Erhitzen des Granulats vollständig ausgegast und anschließend das Granulat bei einer Temperatur im Bereich von 1750 bis 1900 °C in Stickstoff-, Argon- oder Stickstoff/Argon-Atmosphäre unter Aufrechterhaltung eines Druckes von 200 bis 1000 mbar gesintert wird. Als Sinterhilfsmittel können übliche Sinterhilfsmittel, wie Erdalkalioxide und/oder Oxide der Seltenerdmetall, verwendet werden; bevorzugt wird Yttriumoxid als Sinterhilfsmittel verwendet, welches eine Teilchengröße im Bereich von 30 nm 2 µm besitzt. Als Sinterhilfsmittel kann auch ein Carbonat oder ein Halogenid eines Erdalkalimetalls oder eines Seltenerdmetalls verwendet werden. Auch eine metall-organische Verbindung eines Erdalkalimetalls oder Seltenerdmetalls kann als Sinterhilfsmittel verwendet werden, bevorzugt Yttriumacetylacetonat oder Calziumacetylacetonat. Das zur Verwendung gelangende Aluminium-Nitrid besitzt vorteilhafterweise eine Teilchengröße von 0,05 bis 5 µm.

Als Bindemittel haben sich insbesondere organische Bindemittel bewährt, vorzugsweise Polyvinylbutyral. Als Lösungsmittel für das Bindemittel haben sich organische Lösungsmittel, beispielsweise Alkohol, wie Isopropanol, sowie Spiritus oder Aceton bewährt.

Die Ausgasung des Bindemittels samt seines Lösungsmittels kann unter normaler Atomsphäre erfolgen. Sie kann jedoch auch unter Stickstoffhaltiger Atmosphäre, insbesondere unter Stickstoff, oder auch unter Vakuum durchgeführt werden. Die zur Ausgasung einzuhaltende Temperatur richtet sich nach dem verwendeten Bindemittel; bevorzugt werden Bindemittel verwendet, die im Temperaturbereich von 350 bis 550 °C ausgasen.

Die homogene Mischung aus dem Aluminium-Nitrid-Pulver und dem pulverförmigen Sinterhilfsmittel wird mit einer ausreichenden Menge gelösten Bindemittels versetzt, so daß sich eine in ihrer Konsistenz an das Granulierverfahren angepaßte Masse ergibt.

Als Granulierverfahren hat sich insbesondere das an sich bekannte Sprüh-Trocknen bewährt, wie es beispielsweise in Gonoda, L.-Hench, Ceramic Processing before Firing, J. Wiley and Sons, N.J., 1978, Seite 126 beschrieben ist. Andere Granulierverfahren unter Verwendung beispielsweise eines Doppelkonus-Mischers, Schaufelmischers oder eines Granuliertellers sind ebenfalls geeignet. Bei dem Granulieren mittels Sprüh-Trocknen ergeben sich Granulatteilchen, die eine mittlere Größe im Bereich von 20 bis 200 µm besitzen. Bei der Anwendung des Sprüh-Trocken-Verfahrens zum Granulieren wird soviel gelöstes Bindemittel zugesetzt, so daß sich ein Schlicker ergibt. Wenn die mit Bindemittel versetzte homogene Mischung durch Sprüh-Trocknen granuliert wird, hat es sich als zweckmäßig erwiesen, dem Sprüh-Trocken-Vorgang noch einen Mischvorgang vorzuschalten, bei dem eine Trockenmahlsubstanz, wie Glyceroltrioleat oder Fischöl in einer Menge von etwa 1 %, bezogen auf das Gesamtgewicht der homogenen Mischung aus Aluminium-Nitrid und Silterhilfsmittel, zugesetzt wird, wobei dieser vorgeschaltete Mischvorgang vorzugsweise in einer Kugelmühle durchgeführt wird, die mit Mahlkugeln aus Aluminiumoxid ausgestattet ist. Die verwendete Trockenmahlsubstanz dient gleichzeitig als Entflockungsmittel.

Zum Ausgasen des Bindemittels einschließlich seines Lösungsmittels sowie zum Sintern des ausgegasten Granulats haben sich insbesondere Behälter bewährt, wenigstens deren innere Oberfläche im wesentlichen aus Aluminium- oder Bor-Nitrid besteht.

Die Sinterung des Granulats erfolgt bevorzugt in einer Stickstoff-Atmosphäre vorteilhafterweise bei einem Druck von 400 mbar. Die Sinterzeit liegt im Bereich von 0,2 bis 3 Stunden, bevorzugt bei 2 Stunden. Die Sintertemperatur beträgt vorzugsweise 1820 °C.

Sollten bei dem erfindungsgemäßen Verfahren nach dem Sintern einzelne Granulatteilchen miteinander verklebt sein, kann diese Verklebung mechanisch leicht zertrümmert werden.

Das nach dem erfindungsgemäßen Verfahren hergestellte, im wesentlichen aus Aluminium-Nitrid bestehende Granulat hat sich im Wasserdampftest als sehr feuchteunempflich erwiesen. Während einer dreistündigen Behandlung von erfindungsgemäß hergestelltem Granulat mit gesättigem Wasserdampf einer Temperatur von 120 °C unter einem Druck von 1,2 bar konnte eine Gewichtszunahme der Granulatteilchen von nur 2 % gemessen werden, während das sehr feuchtemfindliche Aluminium-Nitrid-Pulver nach einer gleichen Behandlungszeit unter gleichen Bedingungen eine Gewichtszunahme von 40 % aufwies.

Erfindungsgemäß hergestellte, im wesentlichen aus Aluminium-Nitrid bestehende Granulate sind geeignet als Füllstoff für Polymere, die in der elektrischen Isolationstechnik verwendet werden, von denen aber eine gute Wärmeleitfähigkeit gefordert wird, wie beispielsweise für Transistorunterlegscheiben.

Außerdem haben sich erfindungsgemäß hergestellte Granulate als Isolationswerkstoff in Mantelthermoelementen des Aluminium-Nitrids bewährt. Durch die hohe Wärmeleitfähigkeit des Aluminium-Nitrids unter Beibehaltung der sehr guten elektrischen Isolation ergibt sich gegenüber bekannten Isolationswerkstoffen, wie Aluminium- oder Magnesiumoxid, eine höhere Ansprechempfindlichkeit für solche Mantelthermoelemente.

Auch als Isolationswerkstoff für Glühkerzen für Dieselmotoren hat sich das erfindungsgemäß hergestellte Granulat bewährt.

Die angeführte vorteilhafte Verwendung des erfindungsgemäß hergestellten Granulats aus im wesentlichen Aluminium-Nitrid beruht unter anderem auch darauf, daß das Granulat sehr gut rieselfähig ist und damit leicht automatisch dosiert werden kann im Gegensatz zu feuchtempfindlichen Aluminium-Nitrid-Pulver, dessen Teilchen leicht miteinander verkleben, wodurch es überhaupt nicht rieselfähig ist.

Anhand des nachfolgenden Ausführungsbeispieles wird die Herstellung eines erfindungsgemäßen Granulats beschrieben.

Zunächst wird eine homogene Mischung aus 99 Gewichts-% Aluminium-Nitrid und 1 Gewichts-% pulverförmigen Yttrium-Oxids hergestellt. Dieser homogenen Mischung werden 1 Gewichts-%, bezogen auf das Gesamtgewicht der Mischung aus Aluminium-Nitrid-Pulver und Sinterhilfsmittel einer Lösung bestehend aus Polyvinylbutyral als Bindemittel, das in Aceton gelöst ist, zugesetzt und beides so miteinander vermischt, daß ein Schlicker entsteht. Der so hergestellte Schlicker wird einem handelsüblichen, explosionsgeschützten Sprüh-Trockner zugeführt, mittels dessen ein Granulat hergestellt wird, das eine mittlere Korngröße von 60 µm besitzt. Das auf diese Weise hergestellte Granulat wurde in einen Aluminium-Nitrid-Tiegel gefüllt und in einem Ofen auf eine Temperatur von 500 ˚C erhitzt bis das Bindemittel samt seines Lösungsmittel aus dem Granulat ausgegast ist. Die Ausgasungszeit betrug 6 Stunden. Anschließend wurde das Granulat in dem gleichen Tiegel auf eine Temperatur von 1820 ˚C aufgeheizt und während einer Zeitdauer von 2 Stunden gesintert. Der Ofen wurde während dieser Sinter-Zeit unter Stickstoff-Atmosphäre gehalten. Nach Beendigung des Sintervorganges wurde das Granulat im Aluminium-Nitrid-Tiegel bis zum Abkühlen belassen. Das Endprodukt besitzt eine Korngröße, die um etwa 20 % geringer ist als die Korngröße des Granulats nach dem Sprüh-Trocken-Vorgang.

## Ansprüche

1. Verfahren zur Herstellung eines feuchteunempfindlichen Granulats aus im wesentlichen Aluminium-Nitrid, dadurch gekennzeichnet, daß eine homogene Mischung aus mindestens 96 Gewichts-% Aluminium-Nitrid-Pulver und höchstens 4 Gewichts-% eines Sinterhilfsmittels mit einem in wasserfreiem Lösungsmittel gelösten Bindemittel angeteigt und anschließend granuliert, danach das Bindemittel samt seines Lösungsmittels durch Erhitzen des Granulats vollständig ausgegast und anschließend das Granulat bei einer Temperatur im Bereich von 1750 bis 1900 ˚C in Stickstoff-, Argon- oder Stickstoff/Argon-Atmosphäre unter Aufrechterhaltung eines Druckes von 200 bis 1000 mbar gesintert wird.

2. Verfahren nach Anspruch 1, dadurch gekennzeichnet, daß ein in organischem Lösungsmittel gelöstes organisches Bindemittel verwendet wird.

3. Verfahren nach Anspruch 1 oder 2, dadurch gekennzeichnet, daß als Bindemittel Polyvinylbutyral verwendet wird.

4. Verfahren nach den Ansprüchen 1 bis 3, dadurch gekennzeichnet, daß die Ausgasung unter gegenüber der Atmosphäre vermindertem Druck durchgeführt wird.

5. Verfahren nach den Ansprüchen 1 bis 4, dadurch gekennzeichnet, daß als Lösungsmittels für das Bindemittel Alkohol, Spiritus oder Aceton verwendet wird.

6. Verfahren nach den Ansprüchen 1 bis 5, dadurch gekennzeichnet, daß das Granulieren durch Sprühtrocknen durchgeführt wird.

7. Verfahren nach den Ansprüchen 1 bis 6, dadurch gekennzeichnet, daß zur Ausgasung des Bindemittels einschließlich seines Lösungsmittels und/oder zum Sintern des ausgegasten Granulats Behälter verwendet werden, mindestens deren innere Oberfläche aus Aluminium- oder Bornitrid bestehen.

8. Verfahren nach Anspruch 7, dadurch gekennzeichnet, daß dem Sprüh-Trocknen noch ein Mischvorgang unter Zusatz einer Trockenmahlsubstanz vorgeschaltet wird.

**9.** Verfahren nach Anspruch 1 bis 8, dadurch gekennzeichnet, daß ein Aluminium-Nitrid-Pulver einer Teilchengröße im Bereich von 0,05 bis 5 μm verwendet wird.

**10.** Verfahren nach den Ansprüchen 1 bis 9, dadurch gekennzeichnet, daß ein pulverförmiges Sinterhilfsmittel mit einer Teilchengröße von 30 nm bis 2 μm verwendet wird.

**11.** Verfahren nach den Ansprüchen 1 bis 10, dadurch gekennzeichnet, daß als Sinterhilfsmittel Yttrium-Oxid verwendet wird.

**12.** Verfahren nach den Ansprüchen 1 bis 9, dadurch gekennzeichnet, daß als Sinterhilfsmittel Yttriumacetylacetonat oder Calziumacetylacetonat verwendet werden.

**13.** Verwendung eines nach den Ansprüchen 1 bis 12 hergestellten Granulates als wärmeübertragendes Medium.

**14.** Verwendung eines nach den Ansprüchen 1 bis 12 hergestellten Granulats als Füllstoff für Polymere, die in der elektrischen Isolationstechnik verwendet werden.

**15.** Verwendung eines nach den Ansprüchen 1 bis 12 hergestellten Granulats als Isolationswerkstoff in Mantelthermoelementen.

**16.** Verwendung eines nach den Ansprüchen 1 bis 12 hergestellten Granulats als Isolationswerkstoff für Glühkerzen für Dieselmotoren.

## Claims

**1.** A method for the production of a granulated material insensitive to humidity, essentially from aluminium nitride, characterized in that a homogeneous mixture of at least 96 weight % aluminium nitride powder and a maximum of 4 weight % of a sintering adjuvant is mixed to a paste with a binding agent dissolved in anhydrous solvent, and is then granulated, thereafter the binding agent together with its solvent is completely degassed by heating the granulated material and then the granulated material is sintered at a temperature in the range of 1750 to 1900° C in a nitrogen-, argon- or nitrogen/argon atmosphere, whilst maintaining a pressure of 200 to 1000 mbar.

**2.** A method according to Claim 1, characterized in that an organic binding agent dissolved in organic solvent is used.

**3.** A method according to Claim 1 or 2, characterized in that polyvinylbutyral is used as a binding agent.

**4.** A method according to Claims 1 to 3, characterized in that the degassing is carried out under a reduced pressure compared with the atmosphere.

**5.** A method according to Claims 1 to 4, characterized in that alcohol, spirit or acetone is used as a solvent for the binding agent.

**6.** A method according to Claims 1 to 5, characterized in that the granulation is carried out by spray drying.

**7.** A method according to Claims 1 to 6, characterized in that for the degassing of the binding agent including its solvent and/or for the sintering of the degassed granulated material, vessels are used, at least the inner surface of which consists of aluminium- or boron nitride.

**8.** A method according to Claim 7, characterized in that a mixing process with the addition of a dry- grinding substance is connected in series to the spray drying.

**9.** A method according to Claim 1 to 8, characterized in that an aluminium nitride powder having a particle size in the range of 0.05 to 5 μm is used.

**10.** A method according to Claims 1 to 9, characterized in that a pulverulent sintering adjuvant having a particle size of 30 nm to 2 μm is used.

**11.** A method according to Claims 1 to 10, characterized in that yttrium oxide is used as a sintering adjuvant.

**12.** A method according to Claims 1 to 9, characterized in that yttrium acetylacetonate or calcium acetylacetonate are used as a sintering adjuvant.

**13.** Application of a granulated material produced according to Claims 1 to 12 as a heat-transmitting medium.

**14.** Application of a granulated material produced according to Claims 1 to 12 as a filler for polymers which are used in electrical insulation technology.

15. Application of a granulated material produced according to Claims 1 to 12 as insulation material in jacket thermocouple elements.

16. Application of a granulated material produced according to Claims 1 to 12 as insulation material for glow plugs for diesel engines.

## Revendications

1. Procédé de fabrication d'un granulé insensible à l'humidité, composé essentiellement de nitrure d'aluminium, caractérisé par la formation d'une pâte à partir d'un mélange homogène composé d'un minimum de 96 % en poids de poudre de nitrure d'aluminium et d'un maximum de 4 % en poids d'un auxiliaire de frittage, et d'un liant dissous dans un solvant anhydre, par granulation subséquente, puis par extraction totale du liant et de son solvant à l'état gazeux par chauffage du granulé, puis frittage subséquent du granulé à une température de l'ordre de 1750 à 1900° C dans une atmosphère d'azote, d'argon ou d'azote/argon, avec conservation d'une pression comprise entre 200 et 1000 mbar.

2. Procédé selon la revendication 1, caractérisé en ce qu'on utilise un liant organique dissous dans un solvant organique.

3. Procédé selon la revendication 1 ou 2, caractérisé en ce qu'on utilise comme liant du polyvinylbutyral.

4. Procédé selon les revendications 1 à 3, caractérisé en ce que le dégazage a lieu sous une pression inférieure à la pression atmosphérique.

5. Procédé selon les revendications 1 à 4, caractérisé en ce qu'on utilise comme solvant pour le liant, de l'alcool, de l'éthanol ou de l'acétone.

6. Procédé selon les revendications 1 à 5, caractérisé en ce que la granulation est effectuée par séchage par pulvérisation.

7. Procédé selon les revendications 1 à 6, caractérisé en ce qu'on utilise pour extraire le liant et son solvant à l'état gazeux et/ou pour fritter le granulé dégazé des récipients dont au moins la surface interne est en nitrure d'aluminium ou en nitrure de bore.

8. Procédé selon la revendication 7, caractérisé en ce qu'on fait précéder le séchage par pulvérisation d'une opération de mélange en ajoutant une substance broyée à sec.

9. Procédé selon les revendications 1 à 8, caractérisé en ce qu'on utilise une poudre de nitrure d'aluminium de granulométrie comprise dans la plage de 0,05 à 5 $\mu$m.

10. Procédé selon les revendications 1 à 9, caractérisé en ce qu'on utilise un auxiliaire de frittage pulvérulent ayant une granulométrie comprise entre 30 nm et 2 $\mu$m.

11. Procédé selon les revendications 1 à 10, caractérisé en ce qu'on utilise comme auxiliaire de frittage de l'oxyde d'yttrium.

12. Procédé selon les revendications 1 à 9, caractérisé en ce qu'on utilise comme auxiliaire de frittage de l'acétylacétonate d'yttrium ou de l'acétylacétonate de calcium.

13. Emploi d'un granulé fabriqué selon les revendications 1 à 12 comme milieu caloporteur.

14. Emploi d'un granulé fabriqué selon les revendications 1 à 12 comme charge de polymères utilisés dans la technique de l'isolation électrique.

15. Emploi d'un granulé fabriqué selon les revendications 1 à 12 comme isolant dans des thermocouples gainés.

16. Emploi d'un granulé fabriqué selon les revendications 1 à 12 comme isolant pour des bougies de réchauffage de moteurs Diesel.